# EUROPÄISCHE PATENTSCHRIFT

(11) **EP 2 987 744 B1**
(45) Veröffentlichungstag und Bekanntmachung des Hinweises auf die Patenterteilung: **05.07.2017**
(21) Anmeldenummer: 14182026.6
(22) Anmeldetag: 22.08.2014
(51) Int. Cl.: B65D 30/20, B65D 30/08, B31B 70/74

(54) **VERFAHREN ZUR HERSTELLUNG EINES SEITENFALTENVERPACKUNGSBEUTELS**
METHOD FOR PRODUCING A SIDE GUSSETED PACKAGING BAG
PROCÉDÉ DE FABRICATION D'UN SAC D'EMBALLAGE À SOUFFLET LATÉRAL

(43) Veröffentlichungstag der Anmeldung: 24.02.2016
(73) Patentinhaber: Mondi AG, 1030 Wien (AT)
(72) Erfinder: Kösters Jens, 49134 Wallenhorst (DE)
(74) Vertreter: Lorenz, Bernd Ingo Thaddeus

(56) Entgegenhaltungen:
- EP-A1- 0 729 886
- EP-A1- 2 039 620
- EP-A1- 2 186 741
- EP-A1- 2 368 706
- US-A1- 2012 033 901

## Beschreibung

Gegenstand der Erfindung ist ein Verfahren zur Herstellung eines Seitenfaltenverpackungsbeutels mit Frontwänden und die Frontwände verbindenden Seitenfalten, wobei an zumindest einer der Seitenfalten in der Richtung der Seitenfalten verlaufende Schweißnähte gebildet werden. Der Beutelkörper, der gegenüberliegende Frontwände und die Frontwände verbindende Seitenfalten aufweist, kann aus einer eine Innenfolie und eine Außenfolie aufweisenden Kaschierfolie gebildet sein, wobei zwischen den Frontwänden und den Seitenfalten gebildete Seitenkanten zumindest abschnittsweise durch entlang der Seitenkanten verlaufende Schweißnähte versteift sind und wobei die Innenfolie und die Außenfolie mit einem Kaschierklebstoff verbunden sind.

Im Rahmen der Erfindung kann der Seitenfaltenverpackungsbeutel für verschiedene, vorzugsweise körnige oder pulverförmige Schüttgüter eingesetzt werden. Der Seitenfaltenverpackungsbeutel kann beispielsweise für Großgebinde von Lebensmittel wie Reis, Mehl und Zucker, pelletierte Tiernahrung oder auch verschiedene Bauprodukte wie Sand, Mörtel, Beton, Fliesenkleber, zementhaltige Putz- und Ausgleichsmassen für Wände und Böden oder dergleichen vorgesehen sein. Der Seitenfaltenverpackungsbeutel kann jedoch auch für andere pulverförmige oder körnige Füllgüter aus dem Bereich der Chemie sowie der Lebens- und Futtermittel vorgesehen sein.

Ein Seitenfaltenverpackungsbeutel für pulverförmige Bauprodukte ist aus EP 2 186 741 B1 bekannt, wobei die Innenfolie zur Entlüftung des Beutels während des Füllvorganges mit einer Perforation versehen ist, wobei dann durch eine nicht vollflächige Kaschierung von Innenfolie und Außenfolie in dem Beutel zunächst eingeschlossene Luft durch den Freiraum zwischen Innenfolie und Außenfolie abgeführt werden kann. Bei einem körnigen Füllgut wie beispielsweise pelletierter Tiernahrung ist eine solche Abführung von eingeschlossener Luft in der Regel nicht notwendig, so dass dann auf eine Perforation der Innenfolie verzichtet werden kann, wobei die Innenfolie und die Außenfolie auch vorzugsweise vollflächig durch einen Kaschierkleber miteinander verbunden werden.

Die vorliegende Erfindung bezieht sich konkret auf das Verfahren zur Herstellung eines Seitenfaltenverpackungsbeutels, bei dem die Seitenkanten durch Schweißnähte versteift sind, welche auch als Längssiegelnähte bezeichnet werden. Zusätzlich können auch zur Bildung eines verschlossenen Beutelbodens oder Beutelkopfes Quersiegelnähte erzeugt werden. Dabei besteht in der Regel das Bedürfnis, dass bei dem Versiegeln lediglich die Innenfolie aufgeschmolzen wird, während die Außenfolie keine wesentliche Strukturveränderung erfahren soll. Insbesondere wenn die beschriebenen Längssiegelnähte im flachgelegten Zustand des Beutelkörpers mit eingelegten Seitenfalten gebildet werden, muss das Heißsiegeln so erfolgen, dass die dort übereinander liegenden Seitenfaltenabschnitte an der Beutelaußenseite nicht mit sich selbst verschweißt werden.

Um eine gute Heißsiegelbarkeit sowie ein hochwertiges Erscheinungsbild des Seitenfaltenverpackungsbeutels zu erreichen, wird - wie auch in der EP 2 186 741 B1 beschrieben - häufig Polyethylenterephthalat (PET) für die Außenfolie und Polyethylen für die Innenfolie eingesetzt. Bei dieser in der Praxis üblichen Ausführung ergibt sich jedoch der Nachteil, dass ein sortenreines Recycling des Seitenfaltenverpackungsbeutels nicht möglich ist.

Aus der Praxis sind bereits Seitenfaltenverpackungsbeutel bekannt, die an ihrer Außenseite und an ihrer Innenseite Folien aus Polyethylen aufweisen. Wenn bei solchen Beuteln die beschriebenen Längssiegelnähte in dem flachgelegten Zustand gebildet werden, wird zuvor ein separater Teflonstreifen als Trennschicht zwischen die aufeinander liegenden Seitenfaltenabschnitte eingelegt, um dort ein Verschweißen der jeweiligen Seitenfalte mit sich selbst zu verhindern. Durch das Einlegen eines separaten Teflonstreifens ergibt sich ein erhöhter Fertigungsaufwand und eine Begrenzung der Taktzeit für die Beutelfertigung. Darüber hinaus kann auch nicht verhindert werden, dass bei dem Heißsiegeln mit einem üblichen Heißsiegelwerkzeug die Außenschicht erheblich verformt wird, wodurch zumindest das Erscheinungsbild des Seitenfaltenverpackungsbeutels beeinträchtigt werden kann.

Gemäß EP 0 523 542 A1 soll eine Folie mit Deckschichten coextrudiert und als Ganzes gereckt werden. Die Folie wird als Einschlagfolie verwendet.

EP 0 842 044 A1 beschreibt eine kaschierte Folie, welche eine Trägerschicht aus monoaxial orientiertem Polyethylen sowie eine damit kaschierte biaxial orientierte Siegelschicht auf der Basis von Polyethylen aufweist.

Aus EP 2 040 920 A1 sind Folien für Lebensmittelverpackungen bekannt, welche miteinander verbundene Schichten aus Polyethylen aufweisen können. Die Schichten sind so ausgewählt, dass diese ohne einen Kaschierkleber einen Verbund bilden.

Aus EP 0 729 886 A1 ist ein Verfahren zur Herstellung eines Seitenfaltenbeutels bekannt, wobei aus einer Bahn einer Beutelfolie Beutelkörper mit gegenüberliegenden Frontwänden und die Frontwände verbindenden Seitenfalten gebildet werden, wobei während der Bildung des Beutelkörpers die Seitenfalten jeweils mit zwei Seitenfaltenabschnitten auf sich selbst gefaltet und zwischen den Frontwänden eingelegt sind und wobei an zumindest einer Seitenfalte durch eine auf die an den Frontwänden freiliegende Außenseite wirkende Heißsiegeleinrichtung Schweißnähte durch Aufschmelzen der dort angeordneten Innenseite des Beutels gebildet werden, während die Seitenfaltenabschnitte unmittelbar aufeinander aufliegen.

Der vorliegenden Erfindung liegt die Aufgabe zugrunde, ein Verfahren zur Herstellung eines Seitenfaltenverpackungsbeutels anzugeben, bei dem die Außenseite des Beutelkörpers bei dem Erzeugen der Schweißnähte keine wesentliche Strukturänderung erfährt, so dass der Seitenfaltenverpackungsbeutel leicht herzustellen ist.

Gegenstand der Erfindung und Lösung der Aufgabe ist ein Verfahren zur Herstellung eines Seitenfaltenverpackungsbeutels gemäß Patentanspruch 1.

Im Rahmen der Erfindung kann der im erfindungsgemäßen Verfahren hergestellte Seitenfaltenverpackungsbeutel aus einer Kaschierfolie gebildet sein. Der Seitenfaltenbeutel umfasst dann einen Beutelkörper, der gegenüberliegende Frontwände und die Frontwände verbindende Seitenfalten aufweist, wobei die Kaschierfolie aus einer Innenfolie und einer Außenfolie gebildet ist. Zwischen den Frontwänden und den Seitenfalten gebildete Seitenkanten sind zumindest abschnittsweise durch entlang der Seitenkanten verlaufende Schweißnähte versteift, wobei die Innenfolie und die Außenfolie mit einem Kaschierklebstoff verbunden sind. Eine die Außenseite des Beutelkörpers bildende Außenfolie ist aus einem in einer Produktionsrichtung monoaxial orientiertem Polyethylen und die eine Innenschicht des Beutelkörpers bildende Innenfolie aus einem nicht orientiertem Polyethylen einschließlich Polyethylen-Copolymer gebildet.

Die Polymerketten der Außenfolie können bereits bei der Herstellung durch Extrusion in einem gewissen Maße ausgerichtet werden. Unter Orientierung wird jedoch im Rahmen der Erfindung gemäß dem üblichen Verständnis bei der Folienherstellung eine Dehnung der Folie nach dem Erkalten und Erstarren der Polymerschmelze in einem kalten oder allenfalls erwärmten Zustand verstanden. Die sehr starke, durch die Dehnung bedingte Ausrichtung der Polymerketten entlang der Orientierungsrichtung bleibt dann in der Folie erhalten und kann durch eine Strukturanalyse festgestellt werden. Das Reckverhältnis als Verhältnis der Endlänge nach der Orientierung im Vergleich zu der Ausgangslänge vor der Orientierung beträgt bei der monoaxialen Orientierung in Produktionsrichtung üblicherweise zwischen 3:1 und 10:1, wobei die Außenfolie besonders bevorzugt als Blasfolie gefertigt wird. Besonders bevorzugt beträgt das Reckverhältnis zwischen 3:1 und 8:1.

Aufgrund der Molekülorientierung bei dem Reckprozess steigt die Schmelzenthalpie, die zum Aufschmelzen der Folie aufgebracht werden muss, an, wobei der Schmelzpunkt selbst sich nicht oder nicht wesentlich ändert. Durch die Erhöhung der Schmelzenthalpie muss mehr Energie aufgebracht werden, um die Außenfolie zu erweichen und schließlich aufzuschmelzen. Es wird also für ein Aufschmelzen eine längere Aufschmelzzeit und/oder eine höhere Temperatur benötigt.

Erfindungsgemäß werden diese Eigenschaften bei einem Seitenfaltenverpackungsbeutel gezielt dazu genutzt, um mit einfachen Mitteln einen sortenreinen oder weitgehend sortenreinen Seitenfaltenbeutel zu fertigen, der auch gut geschweißt werden kann. Insbesondere sind im Rahmen der Erfindung die Innenfolie und die Außenfolie so aufeinander abgestimmt, dass bei der Erzeugung der Schweißnähte nur die Innenfolie aufgeschmolzen wird, obwohl die Siegelbacken üblicherweise an der Außenfolie anliegen und die Innenfolie durch die Außenfolie hindurch erwärmen müssen.

Durch die monoaxiale Orientierung der Außenfolie in Produktionsrichtung wird auch eine Steigerung des Glanzes sowie der Transparenz beobachtet, so dass auch das Erscheinungsbild des Beutelkörpers verbessert wird. Insbesondere kann die Außenfolie vor dem Kaschieren mit der Innenfolie innenliegend mit einem Aufdruck, das heißt einem Konterdruck, versehen werden.

Die Dicke der Außenfolie liegt typischerweise zwischen 10 µm und 150 µm, insbesondere zwischen 20 µm und 50 µm. Bei den angegebenen Werten trägt die Außenfolie wesentlich zu der gesamten Stabilität des Beutelkörpers bei, wobei die Außenfolie vor dem Kaschieren auch gut gehandhabt und bedruckt werden kann.

Neben der beschriebenen Ausnutzung einer erhöhten Schmelzenthalpie durch die monoaxiale Orientierung kann auch ein besonders großes Siegelfenster (das heißt zulässige Veränderung oder Schwankung der Siegeltemperatur) durch eine geeignete unterschiedliche Materialauswahl für die Außenfolie einerseits und die Innenfolie andererseits erreicht werden. Bevorzugt werden für die Außenfolie Polyethylen-Materialien oder Blends eingesetzt, welche eine Dichte größer 0,93 g/cm³ aufweisen. Geeignet sind beispielsweise Polyethylene mittlerer Dichte (MDPE) oder hoher Dichte (HDPE).

Die monoaxiale Orientierung der Außenfolie erfolgt z. B. durch mehrere hintereinander geschaltete Walzen mit ansteigender Abzugsgeschwindigkeit bei einer leicht erhöhten Temperatur von beispielsweise zwischen 60 °C und 90 °C.

Um bei einer zumindest im Wesentlichen sortenreinen Herstellung des Beutelkörpers einen möglichst großen Unterschied der Erweichungstemperaturen für die Innenfolie und die Außenfolie zu erreichen, ist gemäß einer weiteren bevorzugten Ausgestaltung der Erfindung vorgesehen, dass die Innenfolie oder zumindest eine an der Kaschierfolie außen liegende Siegelschicht der Innenfolie eine Dichte von weniger als 0,91 g/cm³ aufweist.

Als Innenfolie kann beispielsweise eine dreischichtige Folie eingesetzt werden, welche durch Blasfoliencoextrusion hergestellt ist. Die beschriebenen Polyethylene mit einer Dichte von weniger als 0,91 g/cm³ weisen üblicherweise eine sehr niedrige Siegeltemperatur auf. Insbesondere mit Hilfe von Single-Site-Katalysatoren polymerisierte Typen von Polyethylen wie beispielsweise mit Metallocen-Katalysatoren gewonnene Typen mit einer Dichte von weniger als 0,91 g/cm³ sind im besonderen Maße geeignet.

Die Materialien können eine sehr niedrige Dichte (mVLDPE) oder eine ultraniedrige Dichte (mULDPE) aufweisen. Der Schmelzpunkt der Innenfolie oder zumindest einer an der Oberfläche der Kaschierfolie angeordneten Siegelschicht der Innenfolie kann bei dem Einsatz der beschriebenen Materialien auf bis zu etwa 80 °C herabgesetzt werden. Des Weiteren kommen Polyethylen-Copolymere wie Ethylen-Vinyl-Acetat (EVA) mit einer niedrigen Siegeltemperatur in Betracht, wobei dann aber der Reinheitsgrad im Hinblick auf ein Recycling verringert ist.

Im Hinblick auf den erfindungsgemäßen Seitenfaltenverpackungsbeutel sind die Innenfolie und die Außenfolie durch einen geeigneten Klebstoff abschnittsweise oder vollflächig miteinander verklebt. Geeignet ist beispielsweise ein ZweiKomponenten-Klebstoff auf der Basis von Polyurethan.

Der Seitenfaltenverpackungsbeutel ist gemäß einer ersten bevorzugten Weiterbildung der Erfindung für die Aufnahme von pelletierter Tiernahrung vorgesehen. Im Rahmen einer solchen Ausgestaltung weist die Außenschicht üblicherweise eine Dicke zwischen 20 µm und 50 µm auf, wobei die Dicke der Innenschicht beispielsweise zwischen 50 und 100 µm liegen kann.

Gemäß einer alternativen Ausgestaltung der Erfindung ist der Seitenfaltenverpackungsbeutel für die Aufnahme von Baustoffen, insbesondere von pulverförmigen Baustoffen, vorgesehen, welche häufig in Säcken aus beschichtetem Papier angeboten werden.

Im Vergleich zu einem solchen zumindest teilweise aus Papier gebildeten Beutel zeichnet sich der aus einer Folie gebildete Seitenfaltenverpackungsbeutel dadurch aus, dass ein besserer Schutz gegen Feuchtigkeit sowie allgemein eine höhere Widerstandsfähigkeit erreicht werden können. Bei einem Einsatz des Seitenfaltenverpackungsbeutels für Bauprodukte beträgt die Dicke der monoaxial orientierten Außenfolie vorzugsweise zwischen 60 und 140 µm, wobei die Dicke der Innenfolie beispielsweise zwischen 40 und 80 µm liegen kann.

Bei einem für pulverförmige Bauprodukte vorgesehenen Seitenfaltenverpackungsbeutel kann vorgesehen sein, dass die Innenfolie, beispielsweise durch eine Nadelung, mit einer Perforation versehen und nicht vollflächig mit der Außenfolie verbunden ist. Bei dem Befüllen des Seitenfaltenverpackungsbeutels kann dann eingeschlossene Luft durch die Perforation in den Zwischenraum zwischen Innenfolie und Außenfolie gelangen, wodurch dann bei dem Befüllen eine Belüftung und Abfuhr überschüssiger Luft möglich ist.

Das erfindungsgemäße Verfahren ist nicht auf die Herstellung eines Seitenfaltenverpackungsbeutels mit einem aus einer Kaschierfolie gebildeten Beutelkörper beschränkt, sondern umfasst auch Ausgestaltungen mit einer durch Coextrusion gebildeten Beutelfolie.

Gemäß dem erfindungsgemäßen Verfahren zur Herstellung des Seitenfaltenverpackungsbeutels wird zur Bildung einer Außenschicht einer Beutelfolie Polyethylen mit einer Dichte größer als 0,93 g/cm3 schmelzflüssig entlang einer Produktionsrichtung einschichtig extrudiert oder mit weiteren Schichten coextrudiert und nachfolgend im erstarrten Zustand entlang der Produktionsrichtung in einem Verhältnis zwischen 3:1 und 10:1 monoaxial orientiert, wobei aus einer Bahn der Beutelfolie oder aus Abschnitten der Beutelfolie Beutelkörper mit gegenüberliegenden Frontwänden und die Frontwände verbindenden Seitenfalten derart gebildet werden, dass die Innenschicht an einer Innenseite und die Außenschicht aus Polyethylen an einer Außenseite der Beutelkörpers angeordnet sind, wobei während der Bildung des Beutelkörpers die Seitenfalten jeweils mit zwei Seitenfaltenabschnitten auf sich selbst gefaltet und zwischen den Frontwänden eingelegt sind, wobei an zumindest einer Seitenfalte, üblicherweise an beiden Seitenfalten, durch eine auf die an den Frontwänden freiliegende Außenschicht wirkende Heißsiegeleinrichtung Schweißnähte durch Aufschmelzen der dort an der Beutelinnenseite angeordneten Innenschicht gebildet werden, während die Seitenfaltenabschnitte unmittelbar aufeinander liegen. Erfindungsgemäß sind die Materialien wie zuvor beschrieben so ausgewählt und auf den Siegelprozess abgestimmt, dass die an den unmittelbar aufeinander liegenden Seitenfaltenabschnitten angeordneten Außenschichten nicht miteinander verbunden, das heißt verschmolzen werden.

Gemäß einer ersten Variante des Verfahrens werden die Innenschicht und die Außenschicht gegebenenfalls mit weiteren Schichten gemeinsam durch Co-extrusion gebildet. Auch im Rahmen dieser Variante wird im Hinblick auf die Außenschicht die Erhöhung der Schmelzenthalpie durch die monoaxiale Orientierung ausgenutzt. Da gemäß der ersten Variante auch die Innenschicht einer entsprechenden Enthalpieerhöhung unterworfen ist, sind für die Innenschicht und die Außenschicht verschiedene Polyethylentypen mit einer unterschiedlichen Heißsiegelbarkeit einzusetzen.

Gemäß einer bevorzugten Ausgestaltung der Erfindung werden die Innenschicht und die Außenschicht getrennt voneinander gefertigt und zur Bildung der Beutelfolie miteinander kaschiert. Im Rahmen dieser zweiten Variante zur Durchführung des Verfahrens ist der zuvor beschriebene Seitenfaltenverpackungsbeutel erhältlich. Bei einer Kaschierung der Innenschicht und der Außenschicht, welche in Übereinstimmung mit der zuvor beschriebenen Ausführungsform des Seitenfaltenverpackungsbeutels die zuvor beschriebene Innenfolie sowie die Außenfolie bilden können, ergibt sich auch der Vorteil, dass die Innenschicht bzw. Innenfolie einerseits und die Außenschicht bzw. Außenfolie andererseits unterschiedlich gehandhabt und bearbeitet werden können. Wie zuvor beschrieben ist dabei vorzugsweise lediglich für die Außenschicht bzw. Außenfolie eine monoaxiale Orientierung in Produktionsrichtung vorgesehen. Darüber hinaus kann die Außenschicht bzw. Außenfolie vor der Kaschierung an der nachfolgend in Richtung der Innenschicht angeordneten Seite mit einem Aufdruck, insbesondere einem Konterdruck, versehen werden.

Des Weiteren besteht auch die Möglichkeit, die Innenschicht bzw. Innenfolie vor der Kaschierung mit einer Perforation, beispielsweise einer einfachen Nadelung zu versehen. Wenn dann die Außenschicht bzw. Außenfolie und die Innenschicht bzw. Innenfolie bei der Kaschierung lediglich abschnittsweise verbunden werden, kann bei dem Befüllen eine Entlüftung durch den Zwischenraum zwischen der Innenschicht bzw. Innenfolie sowie der Außenschicht bzw. Außenfolie erfolgen. Eine lediglich abschnittsweise Verbindung kann beispielsweise durch große freie Bereiche und/oder eine punktförmige Anordnung des Klebstoffes erreicht werden.

Die Schweißnähte können bei einer Temperatur der Heißsiegeleinrichtung zwischen 120 °C und 170 °C gebildet werden. Als Heißsiegeleinrichtung sind beispielsweise Siegelbacken vorgesehen, welche auf die beschriebene Temperatur aufgeheizt sind. Die Kontaktzeit der Siegelbacken liegt üblicherweise unter einer Sekunde, beispielsweise zwischen 100 ms (Millisekunden) und 500 ms.

Im Rahmen der Erfindung kommen grundsätzlich unterschiedliche Verfahren zur Bildung des Beutelkörpers in Betracht. Insbesondere kann der Beutelkörper durch Falten der Beutelfolie gebildet werden, wobei die Schweißnähte an erzeugten Faltkanten gebildet werden. Dabei kann die Beutelfolie zunächst zu einem Seitenfaltenschlauch umgeformt werden, an dem dann die Schweißnähte in Form von Längssiegelnähten zur Versteifung erzeugt werden.

Gemäß einer alternativen Ausgestaltung des Verfahrens werden die Seitenfalten und die Frontwände als separate Abschnitte der Beutelfolie zugeführt und durch die Schweißnähte miteinander verbunden, wodurch erst der in Umfangsrichtung geschlossene Beutelkörper gebildet wird.

Der Erfindung wird im Folgenden anhand einer lediglich ein Ausführungsbeispiel darstellenden Zeichnung erläutert. Es zeigen:
- Fig. 1: einen Seitenfaltenverpackungsbeutel,
- Fig. 2: eine Beutelfolie in Form einer Kaschierfolie, aus der ein Beutelkörper des Seitenfaltenverpackungsbeutels gebildet ist,
- Fig. 3 und 4: den Bereich einer durch Falten aus der Beutelfolie zwischen zwei Frontwänden gebildeten Seitenfalte vor und nach dem Erzeugen von Schweißnähten in Form von Längssiegelnähten.

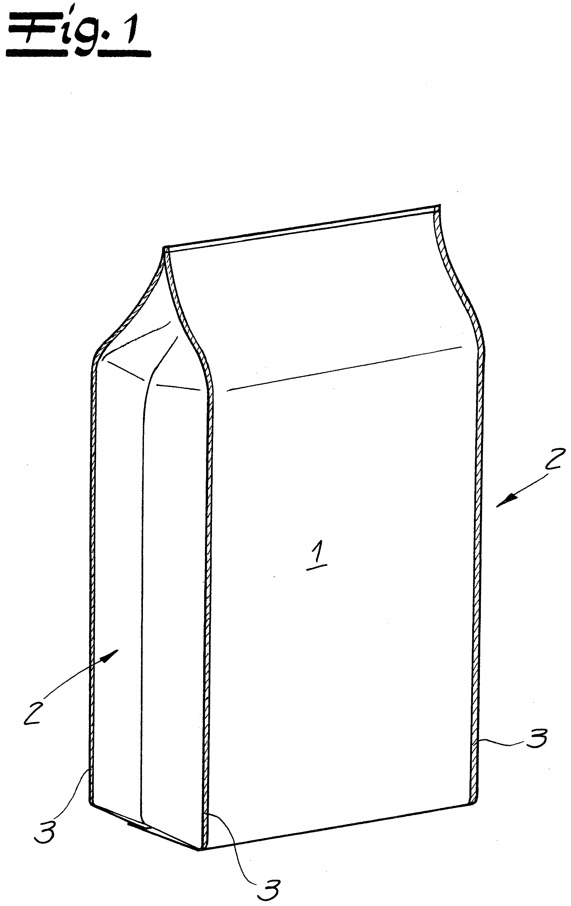

Die Fig. 1 zeigt einen Seitenfaltenverpackungsbeutel mit einem Beutelkörper, der gegenüberliegende Frontwände 1 und die Frontwände 1 verbindende Seitenfalten 2 aufweist, wobei zwischen den Frontwänden 1 und den Seitenfalten 2 gebildete Seitenkanten durch entlang der Seitenkanten verlaufende Schweißnähte 3 in Form von Längssiegelnähten versteift sind.

Der Beutelkörper ist aus einer Kaschierfolie 4 gebildet, wobei eine eine Außenseite des Beutelkörpers bildende Außenfolie 5 durch einen Zwei-Komponenten-Klebstoff auf der Basis von Polyurethan als Kaschierklebstoff 6 mit einer eine Innenseite des Beutelkörpers bildenden Innenfolie 7 verbunden ist. Die Dicke der Außenfolie 5 beträgt zwischen 10 µm und 150 µm, vorzugsweise zwischen 20 µm und 50 µm und in dem Ausführungsbeispiel 30 µm.

Die Außenfolie 5 ist aus einem in einer Produktionsrichtung monoaxial orientierten Polyethylen mit einer Dichte von mehr als 0,93 g/cm³ gebildet, wobei insbesondere Polyethylen mittlere Dichte (MDPE) oder Polyethylen hoher Dichte (HDPE) in Betracht kommen.

Die Außenfolie 5 ist in einem Reckverhältnis zwischen 3:1 und 10:1 monoaxial in Produktionsrichtung gereckt, nachdem eine Ausgangsfolie durch Blasfolienextrusion gebildet wurde. Die Außenfolie wird dazu durch mehrere hintereinander geschaltete Walzen mit ansteigender Abzugsgeschwindigkeit bei einer leicht erhöhten Temperatur zwischen 60 °C und 90 °C gereckt.

Die Innenfolie 7 weist vorzugsweise keine Orientierung durch eine Verstreckung im erkalteten Zustand auf.

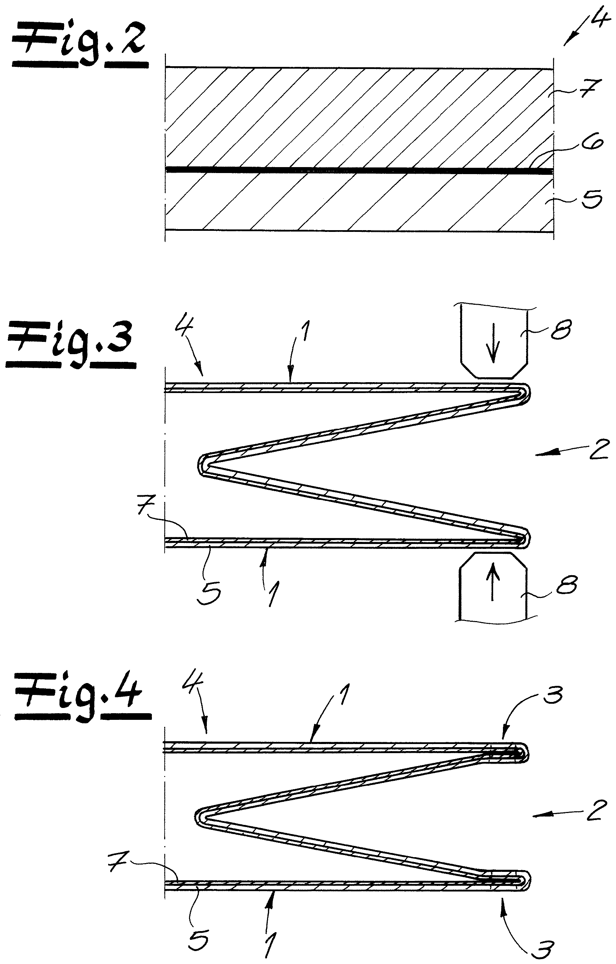

Die Innenfolie 7 ist gemäß der Fig. 2 exemplarisch als Monofolie dargestellt, wobei die Innenfolie 7 jedoch auch mehrschichtig, beispielsweise dreischichtig, coextrudiert sein kann. Die Innenfolie 7 weist dabei vorzugsweise zumindest eine an der Innenseite des Beutelkörpers freiliegende Schicht auf, welche bereits bei geringen Temperaturen gesiegelt werden kann. Dazu trägt einerseits bei, dass die Innenfolie 7 nicht orientiert ist und somit keine Erhöhung der Schmelzenthalpie erfahren hat. Zusätzlich wird auch für die Innenfolie bei einer Ausgestaltung als Monofolie oder für eine in dem Beutelkörper innen liegenden Schicht der Innenfolie 7 auch ein besonders leicht siegelbares Polyethylenmaterial eingesetzt, welches vorzugsweise eine Dichte von weniger als 0,91 g/cm³ aufweist. Geeignet sind beispielsweise mit einem Metallocen-Katalysator polymerisierte Polyethylentypen wie mVLDPE oder mULDPE. Mit den beschriebenen Materialien kann der Schmelzpunkt auf bis zu etwa 80 °C herabgesetzt werden.

Obwohl ein im Wesentlichen sortenreiner Beutelkörper bereitgestellt wird, ist eine besonders leichte Herstellung möglich, wobei auch ohne besondere Maßnahmen oder eine aufwendige Verfahrenssteuerung die Bildung von Heißsiegelnähten auch bei mehreren übereinander liegenden Abschnitten möglich ist.

So zeigen die Fig. 3 und 4 die Bildung der entlang der Seitenkanten verlaufenden Schweißnähte 3 durch ein zwei Siegelbacken 8 aufweisendes Heißsiegelwerkzeug. In dem dargestellten Ausführungsbeispiel ist die Kaschierfolie 4 durch Falten zu einem Seitenfaltenschlauch umgeformt, wobei in der Fig. 3 und Fig. 4 lediglich eine Seite des Schlauches mit einer der Seitenfalten 2 dargestellt ist. Um die Schweißnähte 3 an der die Beutelinnenseite bildenden Innenfolie 7 zu bilden, werden die Siegelbacken 8 zusammengedrückt, wobei dann auch zwischen den Siegelbacken 8 die aufeinander gelegten Abschnitte der Seitenfalte 2 an der Außenfolie 5 aufeinander aufliegen. Durch das sehr unterschiedliche Aufschmelzverhalten der Außenfolie 5 und der Innenfolie 7 kann erreicht werden, dass trotz der direkten Auflage der beiden Abschnitte der Seitenfalte 2 aufeinander nur ein Verschweißen der Innenfolie 7 erfolgt, auch wenn auf das Einlegen des Teflonstreifens oder dergleichen als Schutz verzichtet wird.

## Patentansprüche

1. Verfahren zur Herstellung eines Seitenfaltenbeutels,
wobei zur Bildung einer Außenschicht einer Beutelfolie Polyethylen mit einer Dichte größer als 0,93 g/cm³ schmelzflüssig entlang einer Produktionsrichtung extrudiert und nachfolgend im erstarrten Zustand entlang der Produktionsrichtung in einem Verhältnis zwischen 3:1 und 10:1 monoaxial gedehnt wird,
wobei aus einer Bahn der Beutelfolie oder aus Abschnitten der Beutelfolie Beutelkörper mit gegenüberliegenden Frontwänden (1) und die Frontwände (1) verbindenden Seitenfalten (2) derart gebildet werden, dass eine Innenschicht an einer Innenseite und die Außenschicht aus Polyethylen an einer Außenseite des Beutelkörpers angeordnet sind,
wobei während der Bildung des Beutelkörpers die Seitenfalten (2) jeweils mit zwei Seitenfaltenabschnitten auf sich selbst gefaltet und zwischen den Frontwänden (1) eingelegt sind,
wobei an zumindest einer Seitenfalte (2) durch eine auf die an den Frontwänden (1) freiliegende Außenschicht wirkende Heißsiegeleinrichtung Schweißnähte (3) durch Aufschmelzen der dort an der Beutelinnenseite angeordneten Innenschicht derart gebildet werden, dass nur die Innenschicht aufgeschmolzen wird, während die Seitenfaltenabschnitte unmittelbar aufeinander liegen.

2. Verfahren nach Anspruch 1, wobei die Innenschicht und die Außenschicht gemeinsam durch Coextrusion gebildet werden.

3. Verfahren nach Anspruch 1, wobei die Innenschicht und die Außenschicht getrennt gefertigt und zur Bildung der Beutelfolie miteinander kaschiert werden.

4. Verfahren nach Anspruch 3, wobei die Innenschicht vor der Kaschierung mit einer Perforation versehen wird.

5. Verfahren nach Anspruch 3 oder 4, wobei die Innenschicht und die Außenschicht bei der Kaschierung lediglich abschnittsweise verbunden werden.

6. Verfahren nach einem der Ansprüche 3 bis 5, wobei die Außenschicht vor der Kaschierung an der nachfolgend in Richtung der Innenschicht angeordneten Seite mit einem Aufdruck versehen wird.

7. Verfahren nach einem der Ansprüche 1 bis 6, wobei die Schweißnähte (3) bei einer Temperatur der Heißsiegeleinrichtung zwischen 120 °C und 170 °C gebildet werden.

8. Verfahren nach einem der Ansprüche 1 bis 7, wobei der Beutelkörper durch Falten der Beutelfolie gebildet wird und wobei die Schweißnähte (3) an bei dem Falten erzeugten Faltkanten gebildet werden.

9. Verfahren nach einem der Ansprüche 1 bis 7, wobei für die Frontwände (1) und die Seitenfalten (2) separate Abschnitte der Beutelfolie zugeführt und durch die Schweißnähte (3) verbunden werden.

## Claims

1. Method for producing a side-gusseted bag,
wherein in order to form an outer layer of a bag film, polyethylene having a density greater than 0.93 g/cm³ is extruded in a molten state along a production direction and subsequently stretched mono-axially in the solidified state along the production direction in a ratio between 3:1 and 10:1,
wherein bag bodies having opposite front walls (1) and side gussets (2) connecting the front walls (1) are formed from a web of the bag film or from sections of the bag film in such a manner that an inner layer is disposed on an inner side and the outer layer of polyethylene is disposed on an outer side of the bag body,
wherein during the formation of the bag body the side gussets (2) are each folded with two side gusset sections onto themselves and inserted between the front walls (1),
wherein weld seams (3) are formed on at least one side gusset (2) by means of a heat sealing device acting on the outer layer exposed on the front walls (1) by melting the inner layer disposed there on the bag inner side in such a manner that only the inner layer is melted whilst the side gusset sections lie directly on one another.

2. The method according to claim 1, wherein the inner layer and the outer layer are jointly formed by co-extrusion.

3. The method according to claim 1, wherein the inner layer and the outer layer are fabricated separately and are laminated to one another to form the bag film.

4. The method according to claim 3, wherein the inner layer is provided with a perforation prior to the laminating.

5. The method according to claim 3 or 4, wherein the inner layer and the outer layer are only connected in sections during the laminating.

6. The method according to any one of claims 3 to 5, wherein before the laminating the outer layer is provided with an imprint on the side arranged subsequently in the direction of the inner layer.

7. The method according to any one of claims 1 to 6, wherein the weld seams (3) are formed at a temperature of the heat-sealing device between 120°C and 170°C.

8. The method according to any one of claims 1 to 7, wherein the bag body is formed by folding the bag film and wherein the weld seams (3) are formed on fold edges produced by the folding.

9. The method according to any one of claims 1 to 7, wherein separate sections of the bag film are supplied for the front walls (1) and the side gussets (2) and are joined by the weld seams (3).

## Revendications

1. Procédé de fabrication d'un sachet à plis latéraux,
dans lequel, pour former une couche extérieure d'un film de sachet, du polyéthylène en fusion d'une densité supérieure à 0,93g/cm³ est extrudé le long d'un sens de production, puis est étiré à l'état figé de façon monoaxiale dans un rapport entre 3:1 et 10:1 le long du sens de production,
dans lequel, à partir d'un lé du film de sachet ou de tronçons du film de sachet, des corps de sachet avec des parois avant (1) opposées et des plis latéraux (2) reliant les parois avant (1) sont formés de telle façon qu'une couche intérieure est disposée sur le côté intérieur et que la couche extérieure en polyéthylène est disposée sur un côté extérieur du corps de sachet,
dans lequel, pendant la formation du corps de sachet, les plis latéraux (2) sont pliés sur eux-mêmes respectivement avec deux tronçons de plis latéraux et insérés entre les parois avant (1),
dans lequel sur au moins un pli latéral (2), des cordons de soudure (3) sont formés par un dispositif de marquage à chaud agissant sur la couche extérieure reposant librement sur les parois intérieures (1), par fusion de la couche intérieure disposée sur le côté intérieur du sachet, de telle sorte que seule la couche intérieure est fondue pendant que les tronçons de plis latéraux reposent directement l'un sur l'autre.

2. Procédé selon la revendication 1, dans lequel la couche intérieure et la couche extérieure sont formées conjointement par coextrusion.

3. Procédé selon la revendication 1, dans lequel la couche intérieure et la couche extérieure sont fabriquées séparément et sont pelliculées l'une avec l'autre pour former le film de sachet.

4. Procédé selon la revendication 3, dans lequel la couche intérieure est dotée d'une perforation avant d'être pelliculée.

5. Procédé selon la revendication 3 ou 4, dans lequel la couche intérieure et la couche extérieure sont reliées uniquement par tronçons lors du pelliculage.

6. Procédé selon l'une des revendications 3 à 5, dans lequel, avant le pelliculage, la couche extérieure est dotée d'une impression sur le côté disposé à la suite dans le sens de la couche intérieure.

7. Procédé selon l'une des revendications 1 à 6, dans lequel les cordons de soudure (3) sont formés à une température du dispositif de marquage à chaud située entre 120°C et 170°C.

8. Procédé selon l'une des revendications 1 à 7, dans lequel le corps de sachet est formé par pliage du film de sachet et dans lequel les cordons de soudure (3) sont formés sur les arêtes de plis produites lors du pliage.

9. Procédé selon l'une des revendications 1 à 7, dans lequel des tronçons du film de sachet séparés pour les parois avant (1) et les plis latéraux (2) sont rapprochés et reliés par les cordons de soudure (3).
